# EUROPÄISCHE PATENTSCHRIFT

(11) **EP 1 431 020 B1**
(45) Veröffentlichungstag und Bekanntmachung des Hinweises auf die Patenterteilung: **14.02.2007**
(21) Anmeldenummer: 03027958.2
(22) Anmeldetag: 05.12.2003
(51) Int. Cl.: B29C 44/60, B29C 44/12

(54) **Verfahren und Vorrichtung zur Herstellung eines Schichtkörpers**
Method and apparatus for making a laminated body
Procédé et appareil pour fabriquer un corps laminé

(30) Priorität: 20.12.2002 DE 10260278
(43) Veröffentlichungstag der Anmeldung: 23.06.2004
(73) Patentinhaber: Bayerische Motoren Werke Aktiengesellschaft, 80809 München (DE)
(72) Erfinder: Schmiedel, Manfred, 84144 Geisenhausen (DE); Lesser, Roman, 84030 Ergolding (DE)

(56) Entgegenhaltungen:
- EP-A- 1 350 610
- DE-C- 19 822 113
- US-A- 5 447 425
- PATENT ABSTRACTS OF JAPAN Bd. 0164, Nr. 71 (M-1318), 30. September 1992 (1992-09-30) & JP 4 169353 A (TAKASHIMAYA NIPPATSU KOGYO KK), 17. Juni 1992 (1992-06-17)
- DATABASE WPI Section Ch, Week 199522 Derwent Publications Ltd., London, GB; Class A32, AN 1995-166820 XP002275171 & JP 07 088878 A (TOYOTA JIDOSHA KK) 4. April 1995 (1995-04-04)

## Beschreibung

Die Erfindung betrifft ein Verfahren zur Herstellung eines Schichtkörpers gemäß dem Oberbegriff des Anspruchs 1.

Derartige Schichtkörper finden im Kraftfahrzeugbau beispielsweise im Bereich der Innenausstattung insbesondere als Instrumententafel Verwendung.

Ein übliches Verfahren gemäß dem Oberbegriff des Anspruchs 1 sowie eine Vorrichtung zur Durchführung des Verfahrens gemäß dem Oberbegriff des Anspruchs 9 ist in der DE 198 22 113 C1 gezeigt und beschrieben, gemäß der die Herstellung eines Schichtkörpers in einem Formraum eines mehrteiligen, insbesondere zweiteiligen Formwerkzeuges erfolgt, wobei bei geöffneten Formteilen des Formwerkzeuges die Tragstruktur und die Außenschicht eingebracht und an der Formwand anliegend gehalten werden; zwischen Tragstruktur und Außenschicht wird ein flüssiger Schaumgrundstoff eingebracht.

Im folgenden werden die Formteile des Formwerkzeuges geschlossen und der Schaumgrundstoff expandiert derart, dass die Tragstruktur und die Außenschicht innenseitig vollständig benetzt werden und sich das Schaumvolumen in Richtung des zwischen den Formteilen gebildeten Randspaltes ausdehnt.

Der Randspalt ist mittels einer steuerbaren Dichtung dichtbar und wird idealerweise erst dann dicht geschlossen, wenn der Schaumstoff den inneren Bereich vollständig ausgefüllt hat, jedoch früh genug, um ein Austreten größerer Mengen Schaumstoff zu verhindern.

Als nachteilig hat sich erwiesen, dass eine Steuerung der Randdichtung nur anhand von Erfahrungswerten erfolgen kann und - um die Herstellung eines Fehlerfreien Schichtkörpers sicherzustellen - die Dichtung eher spät dicht geschlossen wird, mit der Folge dass einerseits eine große Menge Schaumstoff austritt, welche nachfolgend wieder entfernt werden muss.

Sobald die Randdichtungen geschlossen sind, steigt der Druck innerhalb der Formteile des Formwerkzeuges bedingt durch den fortschreitenden Schäumvorgang deutlich an. Mit dem Ausreagieren des Schaumstoffes werden die Randdichtungen geöffnet und die Formteile des Formwerkzeuges vorentriegelt, wobei die Bauteilequalität ganz wesentlich vom richtigen Zeitpunkt dieser Schritte abhängt. Ein zu frühes Öffnen der Randdichtungen und Vorentriegeln hat ein Zusammenfallen des Schaumstoffes zufolge, werden die Randdichtungen zu spät geöffneten und vorentriegelt, bilden sich Gasblasen und der Schaum platzt in sich. In jedem Fall ist die Bauteilequalität bis hin zur Unbrauchbarkeit vermindert.

Bei den bekannten Vorrichtungen und Verfahren ist nachteiligerweise der Zeitpunkt, zu welchem der Schaumstoff ausreagiert hat, nicht exakt bestimmbar, so dass eine Ermittlung beispielsweise durch Versuche erfolgen muss, wobei Ausschussteile erzeugt werden und was einen hohen zeitlichen Aufwand erfordert.

Ein weiterer Nachteil der bekannten Vorrichtungen und Verfahren zeigt sich bei einem eventuellen Defekt im Bereich der Randdichtungen, was einen Schaumaustritt verbunden mit einem gestörten Druckaufbau während der Aufschäumphase zufolge hat, da ein derartiger Defekt möglicherweise erst spät - wenn bereits fehlerhafte Teile gefertigt wurden - bemerkt wird und darüber hinaus nur sehr schwer lokalisierbar ist.

Vor dem Hintergrund der beschriebenen Nachteile liegt der Erfindung die Aufgabe zugrunde, ein eingangs genanntes Verfahren dahingehend weiterzubilden, dass eine Korrelation von Prozesskenngrößen und Steuergrößen möglich ist. Insbesondere sollen prozess- und damit qualitätsrelevante Kenngrößen mit der Gasinnendruckkurve korreliert werden. Eine Vorrichtung zur Durchführung des Verfahrens soll bereitgestellt werden.

Zwar weist die DE 198 22 113 C1 einen Drucksensor auf, mittels welchem an der flexiblen Dekorschicht der Schauminnendruck gemessen werden kann, jedoch wird das Sensorsignal gemäß der DE 198 22 113 C1 lediglich dazu verwendet, außenseitig - zwischen Formwerkzeug und Tragteil - einen Gegendruck zu regeln. Das Tragteil liegt dabei in weiten Bereichen nicht an der Formwand des Formwerkzeuges an, sondern wird von dem geregelten Gegendruckpolster beaufschlagt. Eine Steuerung des Prozesses insbesondere hinsichtlich des Öffnens und Schließens der Randdichtungen, der Formhälften sowie der Vorentriegelung findet nicht statt.

Die Lösung der Aufgabe erfolgt mit einem Verfahren mit den Merkmalen des Patentanspruches 1, wobei gemäß des zu Grunde liegenden Gedankens die Tragstruktur und die Außenschicht im wesentlichen an der Formwand des Formraumes anliegen und innenseitig mittels eines die Schaumstoffschicht bildenden, aufschäumenden Schaumgrundstoffes druckbeaufschlagbar sind, das Formwerkzeug zumindest einen mit der Außenschicht in Messkontakt stehenden Drucksensor umfasst, mittels des wenigstens einen Drucksensors Druckmesswerte aufnehmbar sind und eine Prozesssteuerung unter Einbeziehung der gemessenen Druckmesswerte erfolgt.

Vorteilhafte Weiterbildungen des Verfahrens sind Gegenstand der Unteransprüche 2 bis 8 und eine Vorrichtung zur Durchführung des Verfahrens ist mit den Ansprüchen 9 und 10 angegeben.

Gemäß einer besonders vorteilhaften Weiterbildung des Verfahrens werden mittels des wenigstens einen Drucksensors diskret oder kontinuierlich Druckmesswerte aufgenommen, so dass eine Druckverlaufskurve messbar ist.

Sehr zu bevorzugen ist es - wenn zwischen den Formteilen des Formwerkzeuges ein mittels einer steuerbaren Randdichtung verschließbarer Randspalt zum Druckausgleich vorgesehen ist - eine Steuerung der Randdichtung unter Einbeziehung der gemessenen Druckmesswerte erfolgt. Insbesondere wird die Randdichtung geschlossen, sobald ein entsprechender Anstieg der Druckverlaufskurve eine vollständige Füllung des Formraumes mit aufgeschäumtem Schaumstoff unter vollständiger Verdrängung der im Formraum enthaltenen Luft signalisiert und geöffnet, sobald ein abnehmender Gradient der Druckverlaufskurve ein vollständiges Aufschäumen und ausreichendes Erstarren der Schaumschicht signalisiert.

Zweckmäßigerweise erfolgt ein Vorentriegeln der Formteile des Formwerkzeuges zeitgekoppelt mit dem Öffnen der Randdichtung, sobald ein abnehmender Gradient der Druckverlaufskurve ein vollständiges Aufschäumen und ausreichendes Erstarren der Schaumschicht signalisiert.

Sehr vorteilhaft ist es ferner, wenn ein Schließen der Formteile des Formwerkzeuges unter Einbeziehung der gemessenen Druckmesswerte erfolgt. Insbesondere erfolgt - wenn bei geöffneten Formteilen des Formwerkzeuges die Tragstruktur und/oder die Außenschicht vakuumunterstützt an der Formwand des Formwerkzeuges gehalten ist/sind - ein Schließen der Formteile des Formwerkzeuges nur dann, wenn ein entsprechendes Signal des wenigstens einen Drucksensors eine korrekte Positionierung der Tragstruktur und/oder der Außenschicht im Formwerkzeug signalisiert. Auf diese Weise ist ein Detektieren eines falsch eingelegten Einlageteiles möglich und es kann ebenso verhindert werden, dass in diesem Fall die Formhälften schließen.

Gemäß einer bevorzugten Weiterbildung des Verfahrens erfolgt ein Öffnen der Formteile des Formwerkzeuges unter Einbeziehung der gemessenen Druckmesswerte, insbesondere dann, wenn ein entsprechendes Signal des wenigstens einen Drucksensors ein ausreichendes Erstarren der Schaumschicht signalisiert.

Als sehr vorteilhaft hat sich erwiesen, vorzugsweise vor dem Schließen der Formteile des Formwerkzeuges, eine Kalibrierung des wenigstens einen Drucksensors durchzuführen. Hierzu erfolgt ein Abgleich des Drucksensors auf einen vorbestimmten Wert, insbesondere auf null Bar.

Zweckmäßigerweise umfasst bei einer Vorrichtung zur Durchführung des Verfahrens zumindest ein Formteil wenigstens einen insbesondere mit der Außenschicht in. Messverbindung stehenden Drucksensor, wobei es sehr vorteilhaft ist es, wenn der wenigstens eine Drucksensor, gegebenenfalls unter Zwischenschaltung einer Verstärkereinrichtung, signalleitend mit einer Steuereinrichtung verbunden ist.

Von besonderem Vorteil ist es ferner, wenn die Steuereinrichtung geeignet ist, unter Einbeziehung des Signals des wenigstens einen Drucksensors sowie weiterer Eingangsdaten und/oder in der Steuereinrichtung bereits gespeicherter Daten Ausgangssignale zur Steuerung der Vorrichtung zu erzeugen.

Nachfolgend ist ein besonders zu bevorzugendes Ausführungsbeispiel der Erfindung unter Bezugnahme auf Figuren näher erläutert, dabei zeigen schematisch und beispielhaft
- Figur 1: ein Formwerkzeug zur Herstellung eines Schichtkörpers sowie
- Figur 2: einen Druckverlauf während des Herstellvorganges eines Schichtkörpers.

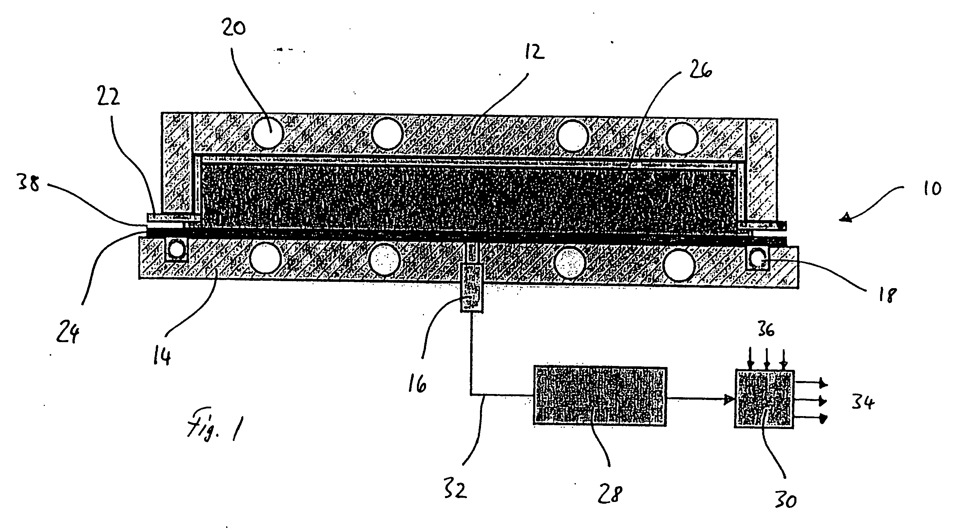

Figur 1 zeigt ein Formwerkzeug 10 zur Herstellung eines Schichtkörpers mit einer formstabilen Tragstruktur 22, einer dekorativen Außenschicht 24 und einer dazwischenliegenden Schaumschicht 26. Das Formwerkzeug 10 umfasst zwei Formteile 12 und 14, welche einen Formraum einschließen.

Bei der formstabile Tragstruktur 22 handelt es sich beispielsweise um ein Blech, um Holzfaser-Trägerteile oder insbesondere um gegebenenfalls glasfaserverstärkte Thermoplast-Trägerteile. Üblicherweise handelt es sich bei der Schaumschicht 26 um Polyurethan-Schaum, als dekorative Außenschicht 24 werden PUR-Sprühhäute, Slush-Häute, Folien, Leder, oder Textilien verwendet.

Zur Herstellung eines Schichtkörpers werden bei geöffneten Formwerkzeuges 10 die Tragstruktur 22 sowie die dekorative Außenschicht 24 jeweils an einer Formhälfte 12, 14 anliegend eingelegt und mittels einer hier nicht näher dargestellten Einrichtung zur Aufbringung eines Vakuums gehalten. Der Formhälften 12 und/oder 14, insbesondere die Formhälfte 14, an welcher die dekorative Außenschicht 24 anliegt, umfassen zumindest einen Drucksensor 16, welcher im Ausführungsbeispiel mit der dekorativen Außenschicht 24 in Messverbindung steht. Bereits bei geöffneten Formhälften 12, 14 ist so die vakuumbedingte Haltekraft überprüfbar.

Auf der Tragstruktur 22 und/oder der dekorativen Außenschicht 24 ist innenseitig ein Schaumgrundstoff aufgebracht. Im Folgenden werden die Formteile 12, 14 geschlossen und der Schaumgrundstoff schäumt auf, wobei sich der Schaumstoff 26 ausdehnt und, den zwischen den Formteilen 12, 14 gebildeten Formraum ausfüllend, in Richtung eines zwischen den Formhälften 12 und 14 gebildeten Randspaltes 38 ausbreitet; mit zunehmender Ausdehnung des Schaumstoffes 26 wird die im Formraum befindliche Luft über den Randspalt 38 verdrängt. Sobald die Luft vollständig verdrängt ist, werden Randdichtungen 18, welche vorliegend als gesteuert aufblasbare Dichtungen ausgebildet und von der Formhälfte 14 umfasst sind, dichtend geschlossen, wobei ein übermäßiger Schaumaustritt aus dem Formwerkzeuges 10 vermieden wird. Der ideale Zeitpunkt zum Schließen der Randdichtungen 18 wird anhand der mittels des Druckssensors 16 aufgenommenen Druckverlaufkurve bestimmt.

Im vorliegenden Ausführungsbeispiel ist nur ein Drucksensor 16 dargestellt, jedoch ist es durchaus zweckmäßig, mehrere derartige Sensoren vorzusehen, um die Druckverhältnisse im Bauteil möglichst gut abbilden zu können. Mittels des Drucksensors 16 ist an der dekorativen Außenschicht 24 der Innendruck im Schaumbereich 26 messbar. Beispielsweise sind auch im Bereich der Randdichtung 18 Drucksensoren vorgesehen, so dass anhand deren Signale eine Defekt im Bereich der Randdichtung 18 festgestellt und lokalisiert werden kann. Zwischen den Formhälften 12, 14 des Formwerkzeuges 10 sind gegebenenfalls mehrere Randspalte verteilt auf den Umfang angeordnet, die unter Umständen mit separat ansteuerbaren Randdichtungen 18 verschließbar sind.

Der Drucksensor 16 ist gegebenenfalls unter Zwischenschaltung einer Verstärkereinrichtung 28 mittels einer Signalleitung 23 mit einer Steuereinrichtung 30 verbunden, welche unter Einbeziehung bereits gespeicherter Daten und/oder weiterer Eingangsgrößen 36 Ausgangsgröße 34 zur Steuerung der Vorrichtung zur Herstellung von Schichtkörpern erzeugt.

Um bei dem Herstellungsprozess vorbestimmte Temperaturkurven durchlaufen zu können, sind die Formteile 12, 14 mit Temperierbohrungen 20 versehen, durch welche einen Heiz- bzw. Kühlmedium leitbar ist; gegebenenfalls sind die Formhälften 12, 14 auch direkte beheizt- bzw. kühlbar. Die Formteile 12, 14 sind zweckmäßigerweise getrennt voneinander temperierbar, so dass den unterschiedlichen wärmetechnischen Kenngrößen respektive der Bauteilgeometrie Rechnung getragen werden kann.

Sobald anhand der mittels des Drucksensors 16 aufgenommenen Druckkurve ein ausreichendes Erstarren der Schaumschicht 26 festgestellt wird, werden die Randdichtungen 18 geöffnet und das Formwerkzeuges 10 vorentriegelt; auch das nachfolgende Öffnen des Werkzeugs orientiert sich am Verlauf der Druckkurve.

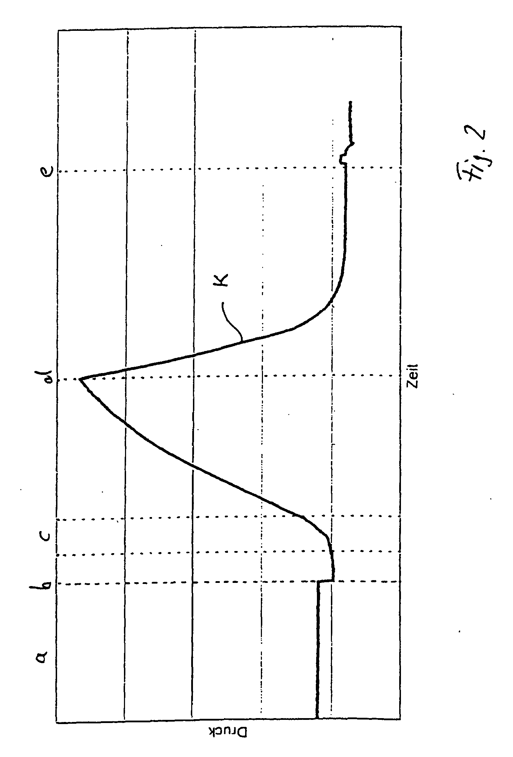

Eine während der Herstellung eines Schichtkörperbauteiles mittels Drucksensor 16 aufgenommene Druckkurve K ist in Figur 2 dargestellt. Die Überprüfung der Vakuum-Haltekraft beigeöffneten Werkzeughälften 12, 14 findet im Bereich a statt, welcher mit einer Kalibrierung des Sensorsignals zum Zeitpunkt b abschließt. Der Anstieg der Druckverlaufkurve K im Bereich c kennzeichnet den Zeitraum, in welchem die Randdichtungen 18 aufgeblasen werden, ein sich verringernder Gradient kennzeichnet ein vollständiges aufschäumen und fortschreitendes Erstarren des Schaumstoffes 26 und gibt das Signal zum Öffnen der Randdichtung 18 und zum Vorentriegeln des Werkzeuges 10 zum Zeitpunkt d. Sobald nachfolgend der Druck in den Bereich des Ausgangswertes gefallen ist und der Werkstoff ausreichend gefestigt ist, werden die Formteile 12, 14 geöffnet und der Schichtkörper kann entnommen werden.

Aufgrund der Möglichkeit der Druckmessung durch die Außenschicht 24 ist anhand einer Messgröße der Produktionsprozess zerstörungsfrei und lückenlos überwachbar. Anhand der Druckverlaufkurve K kann bereits bei Bauteilentnahme eine Qualitätsbewertung vorgenommen werden. Die Auswertung der Druckkurve eröffnet die Möglichkeit, Reaktionszeiten zu reduzieren was zur kürzeren Taktzeiten führt. Ferner zeigt die Druckkurve, ob der Prozessablauf, insbesondere die Steuerzeiten und die Dichtigkeit von Dichtungen, den Vorgaben entspricht, so dass anhand des Druckkurvenverlaufes Prozess- und/oder Bauteilfehler erkennbar sind.

Insgesamt sind die Qualitätsverbesserung der hergestellten Bauteile, die Minimierung des Aufwandes bei der Prozessüberwachung sowie die reduzierten Taktzeiten hervorzuheben.

## Patentansprüche

1. Verfahren zur Herstellung eines Schichtkörpers umfassend
- eine formstabile Tragstruktur (22),
- eine dekorative Außenschicht (24) sowie
- eine elastische Schaumstoffschicht (26) zwischen Tragstruktur (22) und Außenschicht (24)
in einem Formraum eines mehrteiligen öffen- und schließbaren Formwerkzeuges (10) mit einem mittels einer steuerbaren Randdichtung (18) abdichtbaren Randspalt (38) zwischen den Formteilen (12, 14) des Formwerkzeugs (10), wobei
- die Tragstruktur (22) und die Außenschicht (24) im wesentlichen an der Formwand des Formraumes anliegen und innenseitig mittels eines die Schaumstoffschicht (26) bildenden, aufschäumenden Schaumgrundstoffes druckbeaufschlagbar sind,
- das Formwerkzeug (10) zumindest einen mit der Außenschicht (24) in Messkontakt stehenden Drucksensor (16) umfasst und
- mittels des wenigstens einen Drucksensors (16) Druckmesswerte aufnehmbar sind,
**dadurch gekennzeichnet, dass**
unter Einbeziehung der gemessenen Druckwerte die Randdichtung (18), die Öffen- und/oder Schließbewegung der Formteile (12, 14) des Formwerkzeugs (10) und/oder eine Vorentriegelung gesteuert wird.

2. Verfahren nach Anspruch 1, **dadurch gekennzeichnet, dass** mittels des wenigstens einen Drucksensors (16) diskret oder kontinuierlich Druckmesswerte aufgenommen werden und so eine Druckverlaufskurve (K) messbar ist.

3. Verfahren nach Anspruch 1, **dadurch gekennzeichnet, dass** die Randdichtung (18) geschlossen wird, sobald ein entsprechender Anstieg (c) der Druckverlaufskurve (K) eine vollständige Füllung des Formraumes signalisiert.

4. Verfahren nach Anspruch 1, **dadurch gekennzeichnet, dass** die Randdichtung (18) geöffnet wird, sobald ein abnehmender Gradient (d) der Druckverlaufskurve (K) ein vollständiges Aufschäumen und ausreichendes Erstarren der Schaumschicht (26) signalisiert.

5. Verfahren nach Verfahren nach Anspruch 1, 2 oder 4, **dadurch gekennzeichnet, dass** ein Vorentriegeln der Formteile (12, 14) des Formwerkzeuges (10) erfolgt, sobald ein abnehmender Gradient (d) der Druckverlaufskurve (K) ein vollständiges Aufschäumen und ausreichendes Erstarren der Schaumschicht (26) signalisiert.

6. Verfahren nach Anspruch 1, wobei bei geöffneten Formteilen (12, 14) des Formwerkzeuges (10) die Tragstruktur (22) und/oder die Außenschicht (24) vakuumunterstützt an der Formwand des Formwerkzeuges gehalten ist/sind, **dadurch gekennzeichnet, dass** ein Schließen der Formteile (12, 14) des Formwerkzeuges (10) nur dann erfolgt, wenn ein entsprechendes Signal (a) des wenigstens einen Drucksensors (16) eine korrekte Positionierung der Tragstruktur (22) und/oder der Außenschicht (24) im Formwerkzeug (10) signalisiert.

7. Verfahren nach Anspruch 1, **dadurch gekennzeichnet, dass** ein Öffnen der Formteile (12, 14) des Formwerkzeuges (10) dann erfolgt, wenn ein entsprechendes Signal (e) des wenigstens einen Drucksensors (16) ein ausreichendes Erstarren der Schaumschicht (26) signalisiert.

8. Verfahren nach Anspruch 1 oder 2, **dadurch gekennzeichnet, dass** vorzugsweise vor dem Schließen der Formteile (12, 14) des Formwerkzeuges (10) eine Kalibrierung des wenigstens einen Drucksensors (16) erfolgt (b).

9. Vorrichtung zur Durchführung eines Verfahrens nach einem der Ansprüche 1 bis 7 wobei
- zumindest ein Formteil (12, 14) wenigstens einen mit einer einlegbaren Außenschicht in Messverbindung bringbaren Drucksensor (16) umfasst und
- der wenigstens eine Drucksensor (16) gegebenenfalls unter Zwischenschaltung einer Verstärkereinrichtung (28) signalleitend mit einer Steuereinrichtung (30) verbunden ist,
**dadurch gekennzeichnet, dass**
mittels der Steuereinrichtung (30) unter Einbeziehung des Signals des wenigstens einen Drucksensors (16) Ausgangssignale (34) zur Steuerung der Randdichtung (18), der Öffen- und/oder Schließbewegung der Formteile (12, 14) des Formwerkzeuges (10) und/oder der Vorentriegelung erzeugbar sind.

10. Vorrichtung nach Anspruch 9, **dadurch gekennzeichnet, dass** die Ausgangssignale (34) unter Einbeziehung weiterer Eingangsdaten (36) und/oder in der Steuereinrichtung bereits gespeicherter Daten erzeugbar sind.

## Claims

1. A method for producing a laminated body comprising
- a dimensionally stable support structure (22),
- a decorative outer layer (24) and
- an elastic foam material layer (26) between the support structure (22) and outer layer (24)
in a mould chamber of a multi-part mould (10), which can be opened and closed, with an edge gap (38), which can be sealed by means of a controllable edge seal (18), between the mould parts (12, 14) of the mould (10), wherein
- the support structure (22) and the outer layer (24) rest substantially on the mould wall of the mould chamber and can be subjected to pressure on the inside by means of a foaming basic foam material forming the foam material layer (26),
- the mould (10) comprises at least one pressure sensor (16) which is in measuring contact with the outer layer (24) and
- pressure measurement values can be taken using the at least one pressure sensor (16),
**characterised in that**
using the measured pressure values, the edge seal (18), the opening and/or closing movement of the mould parts (12, 14) of the mould (10) and/or a preliminary unlocking are controlled.

2. A method according to claim 1, **characterised in that** pressure measurement values are taken discretely or continuously by means of the at least one pressure sensor (16) and a pressure course curve (K) can thus be measured.

3. A method according to claim 1, **characterised in that** the edge seal (18) is closed as soon as a corresponding rise (c) in the pressure course curve (K) signals complete filling of the mould chamber.

4. A method according to claim 1, **characterised in that** the edge seal (18) is opened as soon as a falling gradient (d) of the pressure course curve (K) signals complete foaming and adequate solidification of the foam layer (26).

5. A method according to claim 1, 2 or 4, **characterised in that** a preliminary unlocking of the mould parts (12, 14) of the mould (10) takes place as soon as a falling gradient (d) of the pressure course curve (K) signals complete foaming and adequate solidification of the foam layer (26).

6. A method according to claim 1, wherein, when the mould parts (12, 14) of the mould (10) are open, the support structure (22) and/or the outer layer (24) is/are held, supported by a vacuum, on the mould wall of the mould, **characterised in that** the mould parts (12, 14) of the mould (10) are only closed when a corresponding signal (a) of the at least one pressure sensor (16) signals a correct positioning of the support structure (22) and/or the outer layer (24) in the mould (10).

7. A method according to claim 1, **characterised in that** the mould parts (12, 14) of the mould (10) are opened when a corresponding signal (e) of the at least one pressure sensor (16) signals adequate solidification of the foam layer (26).

8. A method according to claim 1 or claim 2, **characterised in that** a calibration of the at least one pressure sensor (16) preferably takes place (b) prior to the closing of the mould parts (12, 14) of the mould (10).

9. A device for carrying out a method according to any one of claims 1 to 7, wherein
- at least one mould part (12, 14) comprises at least one pressure sensor (16) which can be brought into measuring connection with an insertable outer layer and
- the at least one pressure sensor (16) is connected in a signal-guiding manner to a control mechanism (30) optionally with the interposition of an amplification mechanism (28),
**characterised in that**,
by means of the control mechanism (30), using the signal of the at least one pressure sensor (16), output signals (34) can be generated to control the edge seal (18), the opening and/or closing movement of the mould parts (12, 14) of the mould (10) and/or the preliminary unlocking.

10. A device according to claim 9, **characterised in that** the output signals (34) can be generated using further input data (36) and/or data already stored in the control mechanism.

## Revendications

1. Procédé de fabrication d'un corps stratifié comprenant
- une structure porteuse (22) de forme stable,
- une couche extérieure décorative (24) et
- une couche de mousse élastique (26) entre la structure porteuse (22) et la couche extérieure (24)
dans un volume d'un outil de moulage (10) en plusieurs parties pouvant être ouvert et fermé, avec une fente périphérique (38) rendue étanche au moyen d'un élément d'étanchéité (18) que l'on peut commander entre les parties du moule (12, 14) de l'outil de moulage (10), selon lequel
- la structure porteuse (22) et la couche extérieure (24) s'appliquent pour l'essentiel contre la paroi du volume de moulage et peuvent être sollicitées par pression sur la face intérieure au moyen d'une base moussante formant la couche de mousse (26),
- l'outil de moulage (10) comprend au moins un capteur de pression (16) en contact de mesure avec la couche extérieure (24), et
- au moins un capteur de pression (16) permet d'enregistrer des valeurs de mesure de pression,
**caractérisé en ce que**
l'élément d'étanchéité périphérique (18), le mouvement d'ouverture et/ou de fermeture des parties du moule (12, 14) de l'outil de moulage (10) et/ ou un prédéverrouillage sont commandés en utilisant les valeurs de pression mesurées.

2. Procédé selon la revendication 1,
**caractérisé en ce que**
le capteur de pression (16) enregistre à discrétion ou continuellement des valeurs de mesure de pression permettant d'établir une courbe de pression (K).

3. Procédé selon la revendication 1,
**caractérisé en ce que**
l'élément d'étanchéité périphérique (18) est fermé dès qu'une croissance (c) de la courbe de pression (K) signale un remplissage complet du volume de moulage.

4. Procédé selon la revendication 1,
**caractérisé en ce que**
l'élément d'étanchéité périphérique (18) est ouvert dès qu'un gradient décroissant (d) de la courbe de pression (K) signale un moussage complet et une solidification suffisante de la couche de mousse (26).

5. Procédé selon la revendication 1, 2 ou 4,
**caractérisé en ce qu'**
un prédéverrouillage des parties (12, 14) de l'outil de moulage (10) s'effectue dès qu'un gradient décroissant (d) de la courbe de pression (K) signale un moussage complet et une solidification suffisante de la couche de mousse (26).

6. Procédé selon la revendication 1,
selon lequel la structure porteuse (22) et/ou la couche extérieure (24) sont maintenues grâce à la dépression contre la paroi de l'outil de moulage, lorsque les parties (12, 14) de l'outil de moulage (10) sont ouvertes,
**caractérisé en ce qu'**
une fermeture des parties (12, 14) de l'outil de moulage (10) ne s'effectue que si un signal (a) correspondant du capteur de pression (16) signale un positionnement correct de la structure porteuse (22) et/ou de la couche extérieure (24) dans l'outil de moulage (10).

7. Procédé selon la revendication 1,
**caractérisé en ce qu'**
une ouverture des parties (12, 14) de l'outil de moulage (10) s'effectue lorsqu'un signal (e) correspondant du capteur de pression (16) signale une solidification suffisante de la couche de mousse (26).

8. Procédé selon la revendication 1 ou 2,
**caractérisé en ce qu'**
un calibrage du capteur de pression (16) s'effectue (b) avant la fermeture des parties (12, 14) de l'outil de moulage (10).

9. Dispositif pour la mise en oeuvre d'un procédé selon l'une des revendications 1 à 7, dans lequel
- au moins une partie du moule (12, 14) comprend au moins un capteur de pression (16) pouvant être mis en contact de mesure avec une couche extérieure insérable,
- le capteur de pression (16) est relié à un dispositif de commande (30) pour la transmission des signaux, le cas échéant par l'intermédiaire d'un dispositif amplificateur (28),
**caractérisé en ce que**
le dispositif de commande (30) génère des signaux de sortie (34) pour commander l'élément d'étanchéité périphérique (18), le mouvement d'ouverture et/ou de fermeture des parties (12, 14) de l'outil de moulage (10) et/ou le prédéverrouillage en utilisant le signal du capteur de pression (16).

10. Dispositif selon la revendication 9,
**caractérisé en ce que**
les signaux de sortie (34) peuvent être générés en utilisant d'autres données d'entrée (36) et/ou des données déjà stockées dans le dispositif de commande.
